# EUROPEAN PATENT APPLICATION

(11) **EP 1 690 483 A1**
(43) Date of publication of application: **16.08.2006**
(21) Application number: 05290304.4
(22) Date of filing: 10.02.2005
(51) Int. Cl.: A47J 37/10, A47J 36/06

(54) **Lid for cooking utensil or ovenware, in particular a lid for a frying pan or a cooking vessel, and cooking utensil and ovenware comprising said lid**

(71) Applicant: Newell SAS, 36005 Châteauroux (FR)
(72) Inventor: Parisi, Angelo, 20127 Milano (IT)
(74) Representative: Metten, Karl-Heinz

(57) **Abstract**

The present invention relates to a lid (2,2') for cooking utensil or ovenware, in particular a lid for a frying pan or a cooking vessel, comprising a rim (10), a handle (20) or a knob (16), a first portion (4) and a second portion (6) wherein the first portion of the lid covers a surface greater than the second portion of the lid, in particular more than half of the surface covered by the lid, wherein the knob or handle (20) is at least partially attached to the second portion, wherein at least part of the first portion or at least part of the second portion are at least partially tilted, their respective inner and/or outer surfaces forming an obtuse or right angle, thereby allowing to place the lid when oriented upside down in a stable manner on a horizontal surface on at least a part of the first portion. Also encompassed by the present invention are cooking utensil and ovenware, in particular a frying pan or a cooking vessel, which comprise said lid.

## Description

The present invention relates to a lid for cooking utensil or ovenware, in particular to a lid for a frying pan or a cooking vessel, and to cooking utensil and ovenware comprising said lid.

Conventional lids for frying pans or cooking vessels usually have a slightly convex shape, the highest part of the lid being in its center to which a knob or handle is attached. The circumference of these lids in general is rather regular, most often having a circular shape.

During the cooking process it is from time to time necessary to lift the lid from the cooking vessel or frying pan, either to add further ingredients or to inspect the progress of the cooking process. As condensed water is frequently formed on the inner surface of the lid puddles of water are formed on the surface of a flat work space when placing the lid on said surface. Due to the cooling of air kept between the lid and the work space the lid can be sucked to said work space thereby hampering its handling. When a conventional lid is placed upside down it is most often difficult to grab the knob without getting at least slightly burnt by the heated lid. Also, in this position the lid is rather instable and can pivot around the knob.

According to DE 195 42 815 C1 a lid for cooking vessels is provided with a shaft holder which on its upper side has at least three raised portions on which the lid can rest when placed upside down. However, a rather extended and heavy shaft is needed to balance the weight of the lid and to provide a stable configuration. The lid as proposed in DE 195 42 815 C1 requires not only extensive working space but also a lot of storage space which is regularly not available in household kitchens.

In GB 1 284 361 a cooking utensil is addressed which comprises an indicator responsive to the total amount of heat supplied to the cooking utensil and also a scale having calibrations corresponding to different amounts of heat supplied. This scale together with, for example, a color-changing layer can be located on the outer surface of the lid or can be incorporated therein. Alternatively, the handle of the lid can be provided with a rod of material of low heat conductivity which is coated with a color-changing layer.

GB 1 484 558 describes a frying pan which comprises a frusto-conical lid having an aperture at its apex and also an inwardly curved lower edge forming a collection channel. With the inwardly curved lower edge water vapor or fat thrown or boiling off the main body is collected on the inner sloping surface of the lid and then runs under the action of gravity into the collection channel. A similar lid can be derived from the disclosure of DE 35 05 630 C1. Again, the top of the frusto-conical lid has to be provided with a hole, and the rim has to be placed on the cooking vessel in such a way that communication between the interior of the vessel and the atmosphere is provided. As with the lid of GB 1 454 558 also the lid as described in DE 35 05 630 C1 allows for collecting at least a part of the expelled moisture in a collecting channel along the rim. However, in both cases no specific requirements are disclosed as to the attachment of the handle. Also, it appears to be necessary to adhere to the frusto-conical shape of the lid to achieve the desired results. Already due to the collection channel at the rim these lids are evidently not suited to be placed upside down.

It has therefore been an object of the present invention to provide a lid for cooking utensil which can be easily and safely handled and which, in particular, avoids the risk of burning the skin when placing the lid upside down on a work space. It has also been an object of the present invention to provide a lid for a cooking utensil which when placed on said cooking utensil allows to watch the progress of the cooking procedure without being obviated by condensed water.

Accordingly, the object underlying the present invention has been solved by a lid for cooking utensil or ovenware, in particular a lid for a frying pan or a cooking vessel, comprising a rim, a handle or a knob, a first portion and a second portion wherein the first portion of the lid covers a surface greater than the second portion of the lid, in particular more than half of the surface covered by the lid, wherein the knob or handle is at least partially attached to the second portion, wherein at least part of the first portion or at least part of the second portion are at least partially tilted, their respective inner and/or outer surfaces forming an obtuse or right angle. Thus, the lid of the invention when placed upside down on a horizontal surface is placeable in a stable manner on at least a part of the first portion.

The lid of the present invention can be made of any material which is regularly used with conventional lids for cooking utensil. Preferred lids are at least partially transparent and are made from suitable glass types such as soda-lime glass or borosilicate glass. Preferably, at least a major part of the first portion is transparent.

In another embodiment, the first and second portion represent separate parts of the lid which have been assembled to form the lid of the invention. For example, the first and second portion can be made of different glass types. Usually, the main body of the lid of the invention, that is the lid without its handle or knob, is formed in one piece. In general, with the first and second portion individual sections of the lid are defined.

The shape or outline of the lid according to the invention can be regular or irregular, but usually comprises a circular or rectangular shape. The first and second portions each regularly cover a contiguous area. If the first or second portions are not flat but, for example, regularly or irregularly rounded, e.g. in a convex manner, it is nevertheless possible to determine the general orientation of the average plane of the respective portion, if required by known mathematical means. In this way it is possible to determine the respective orientation between the first and second portion by way of an angle between the averaged planes of first and second portion.

The first and second portions of the lid usually form uniform areas which each exhibit similar properties with respect to their surface form, e.g. flatness, and inclination. The edges of the first and second portions can either extend directly to the rim or towards each other or can pass into said transitional zones which are usually curved or rounded. Usually, in a preferred embodiment of the lid according to the invention when said lid is depicted in a top plan view and is bisected by two imaginary lines which intersect each other in a rectangular manner and divide the lid into four regions of essentially equal size, the first portion is part of all four regions whereas the second portion is part of only two regions.

Accordingly, lids according to the present invention preferably can further comprise an, in particular at least partially outwardly rounded or edged, first transition zone between the first and second portion and/or an, in particular at least partially outwardly rounded or edged, second transition zone between the first portion and the rim and/or an, in particular at least partially outwardly rounded or edged, third transition zone between the second portion and the rim.

The upper edges of the tilted first and second portion are usually at least partially attached to each other. This area of attachment can be referred to a first transition zone. This zone can be rather narrow but can also be rather extended in another embodiment.

In particular if the first transition zone is rather extended the knob or handle can at least partially be attached to the second portion and/or to the first transition zone. Depending on the respective size and shape of the first and second portion the knob or handle with its base can sometimes also slightly extend in the first portion, however, only in such a manner that it does not hamper a safe and stable placement of the lid on its first portion when turned upside down.

Preferably at least part of the first transition zone represents the highest or upper part of the lid when its rim is placed on a horizontal surface.

The lid according to the present invention is characterized by exhibiting at least two portions which are distinct from one another at least with respect to their size. The first portion of the lid is larger than the second portion of the lid. At least one of the first and the second portion is tilted meaning that the respective portion has when the lid is displaced on a horizontal surface on average an angle not greater than 90°. Preferably both, the first and second portions are tilted. The area where both, the first and second portion are adjoining each other preferably forms the upper part of the lid when placed, for example, on a cooking vessel or a horizontal surface.

According to a suitable embodiment the first portion can be essentially horizontally aligned while the second portion is tilted. The first and second portions can directly extend towards the rim. Most preferably, transitional zones are provided between the first portion and the rim and the second portion and the rim, and also between the first and second portion.

When the lid according to the present invention is placed upside down on the outer surface of the first portion it automatically acquires a stable configuration, no pivoting or tilting of the lid will occur. Accordingly, the center of gravity of the lid of the invention lies within the area covered by the first portion. Also, the knob or handle is at least partially attached to the second portion or a transition zone in such a manner and/or its shape and size is designed in such a way that it preferably will not touch the horizontal surface on which the lid is placed in an upside down orientation on its first portion. Alternatively, the knob or handle can contact said surface in the upside down orientation of the lid, but without affecting the area of support of the first portion. Thus, in the latter embodiment the upper part of the contour of the knob or handle just touches the plane which is formed by the support area of the outer surface of the first portion of the lid. In other words, the knob or handle preferably does not intersect an imaginary plane spanned by the first portion or the averaged plane of the first portion. If it intersects said plane a mechanism is provided, e.g. a spring mechanism, according to which the knob or handle when coming in contact with the surface of a work space in case the lid is turned upside down will recede until the lid rests on the first portion.

In a preferred embodiment the inner and outer surfaces of the first and second portions are essentially aligned in parallel.

In another preferred embodiment it is provided that at least part of the outer surface of the first portion forms an essentially flat area or an area being, in particularly only slightly, shaped outwardly or in a convex manner. Preferably, the entire outer surface of the first portion is essentially flat. With this embodiment condensed water on the inner surface of the first portion most effectively runs down to the rim or the transition zone between first portion and rim. Also, a flat outer surface of the first portion secures a most stable support area when placed upside down.

It is also preferred that at least part of the outer surface of the second portion forms an essentially flat area or an area being, in particularly only slightly, shaped outwardly or in a convex manner.

According to another aspect of the present invention the second portion of the lid comprises at least one heat shield, in particular on its inner surface. As the first portion already allows for inspecting the cooking process when the lid is transparent, it is no longer necessary to also be able to provide an at least fully transparent second portion. Further, as the knob or handle is attached to said second portion it has been found to be rather beneficial to apply a heat shield to said portion, thereby minimizing the risk of injuries due to burning even more.

The object underlying the present invention is further solved by another preferred embodiment of a lid wherein the handle has a first part which is attached to the lid and a second part opposite said first part, and wherein when the rim of the lid is placed on a horizontal surface the first part is located above the second part of the handle.

A preferred embodiment also encompasses a lid wherein the outer surface of the first portion comprises at least one support point or base, e.g. 2, 3, 4, 5 or 6 of such support points or bases, in particular 3 or 4 support points or bases, and/or at least two protruding bars on which the lid can be placed in a stable manner when turned upside down.

The lids of the present invention can be used with a multitude of cooking utensils, in particular frying pans or cooking vessels. The term cooking utensil in the meaning of the present invention can be understood in its broadest sense including, for example, skillets, woks, stoves, casseroles, baking dishes, cooking vessels, microwave vessels, fondue vessels, pans and the like. The lids of the present invention can also be used with conventional ovenware. Ovenware shall encompass but shall not be limited to heat-resistant dishware or crockery in which food can be cooked, and, if need be, also served, such as gratin dishes or lasagne dishes.

With the lid as disclosed herein it has been surprisingly found that it can be safely used, especially safely placed upside down, and also safely and easily placed back again from said upside down orientation onto the cooking utensil. By not only placing the knob or handle away from the center of the lid but also on the smaller portion of the lid, said lid can be more easily handled with just one hand, for example, when adding further ingredients. In that at least the largest portion of a preferred embodiment of the lid of the present invention is essentially flat and also oblique steam and condensed water can run down towards the rim thereby providing a transparent surface with higher visibility. Moreover, the lid when placed upside down does not dirty the working space and in addition is held in a stable configuration. Different from conventional round lids having a convex shape and a handle attached to its center, the lid of the present invention cannot pivot around the knob or handle when placed upside down. It is another advantage of the lid of the present invention that it alleviates shipment and storage as it can be easily placed upside down into the respective cooking utensil.

Further aspects of the invention will be understood from the following detailed description accompanying the drawings, in which
- Figure 1: is a schematic perspective representation of the lid according to the present invention without showing a knob or handle;
- Figure 2: is a top plan view of the lid according to Fig. 1;
- Figure 3: is a cross-sectional view of the lid according to Fig. 1;
- Figure 4: is a schematic side view of another embodiment of the lid according to the present invention;
- Figure 5: is a schematic side view of the lid according to Fig. 4 when placed upside down;
- Figure 6: is a schematic side view of another embodiment of the lid according to the invention;
- Figure 7: is a schematic perspective representation of another embodiment of a lid according to the invention; and
- Figure 8: is another perspective view of the embodiment according to Fig. 7.

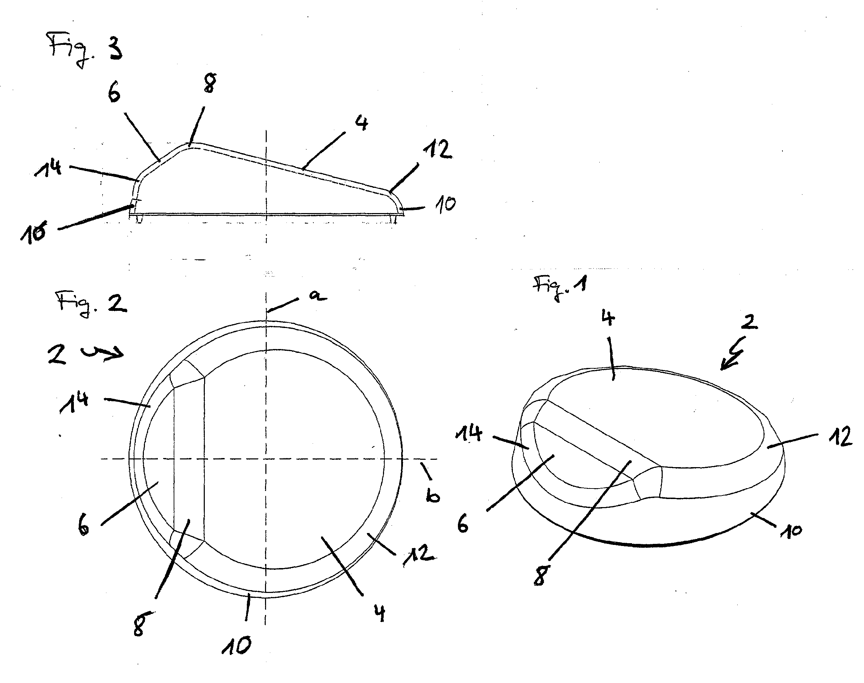

In Fig. 1 lid 2 according to the present invention is shown, however, without a knob or handle for reasons of better visibility of the entire body of the lid. Lid 2 comprises a major first portion 4, and minor second portion 6, which are connected via a first transitional zone 8, as well as a rim 10. The main body of the lid as shown in Fig. 1 is usually formed in one piece. The lower edge of the rim 10 lies within a plane. The first portion 4, which overlaps at least two third of the surface which is covered by lid 2 is essentially flat at least on its outer surface, and oriented in a tilted manner when the lid is placed on a horizontal surface. Also the second portion 6 is essentially flat at least on its outer surface, and also tilted when the lid is placed on a horizontal surface. The first and second portions 4 and 6 are also tilted in opposite directions, not necessarily with the same angle, and form an obtuse angle between their respective inner and in particular also their outer surfaces. The first transition zone 8 between the first and second portions 4 and 6 forms the highest or upper part of the lid 2 when placed on a cooking vessel or on a horizontal surface, and can be slightly rounded or curved. A knob or handle is attached to the second portion 6 and/or to the first transitional zone 8 (not shown). Further, second and third transitional zones 12 and 14 are provided between the first portion 4 and the rim 10 as well as between the second portion 6 and the rim 10, respectively. To better understand the proportions of the first and second portions 4 and 6, lid 2 of Fig. 1 is depicted from above in Fig. 2. Imaginary intersecting dotted lines a and b divide the lid 2 into four regions of essentially similar size. It is apparent that the first portion 4 forms part of all four regions. Preferably, the first portion 4 forms major parts of at least with two adjacent regions, i.e. covering more than have of the area of said regions. The second portion 6 forms part of the remaining two adjacent regions. Usually the first and second portion 4 and 6 have a rather symmetric shape.

In addition, an even clearer understanding of the details of the lid 2 of the present invention can be derived from the cross-sectional view shown in Fig. 3.

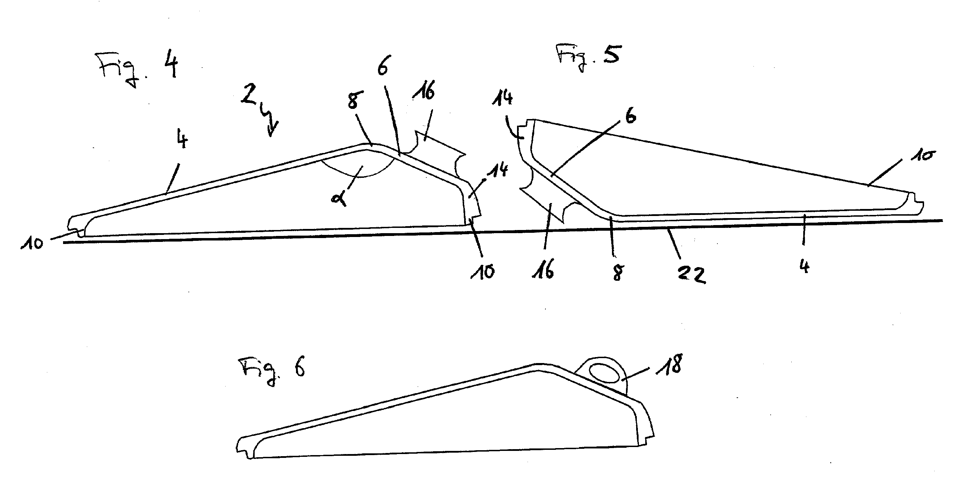

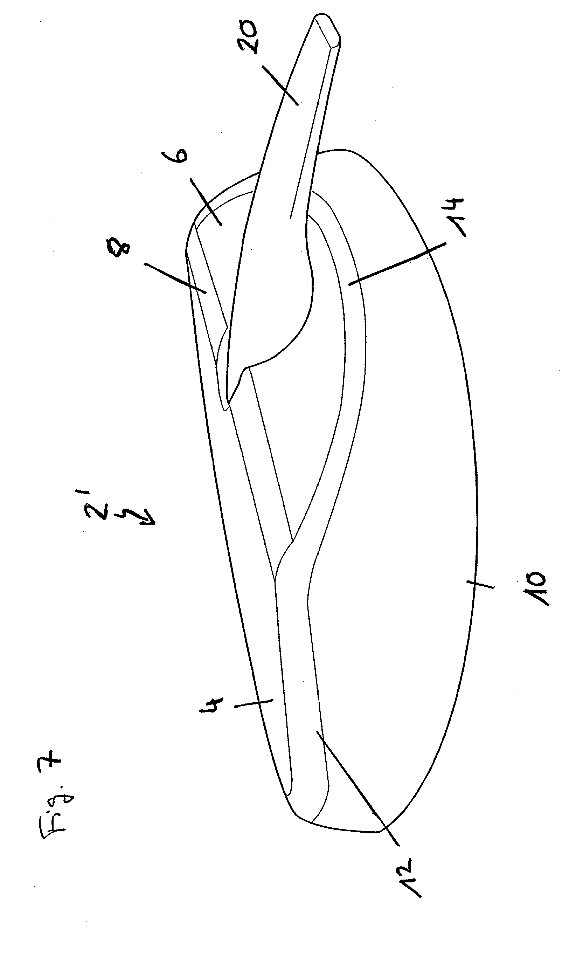

In Fig. 4 another embodiment of lid 2 of the present invention is disclosed now also showing a knob 16 which is attached the second portion 6. The first and second portion 4 and 6 are essentially flat. The first transition zone 8 between the first and second portion 4, 6 is rather narrow. It is clearly discernable that the first and second portion 4 and 6 form an obtuse angle α. The first portion essentially extends down to the rim 10 whereas between the second portion 6 and the rim 10 a third transition zone 14 can be depicted. Such a lid can also easily be placed upside down on a work space as shown in Fig. 5. As can be derived from this drawing the flat surface of the first portion 4 of the lid 2 is ideally suited to safely and firmly support the lid 2 when placed upside down on a flat working space 22. Also, the knob 16 does not touch the working space surface 22 when the lid is turned upside down.

Different from the knob 16 of the lid in Fig. 4 a knob 18 having a grip hole is used with the embodiment as shown in Fig. 6.

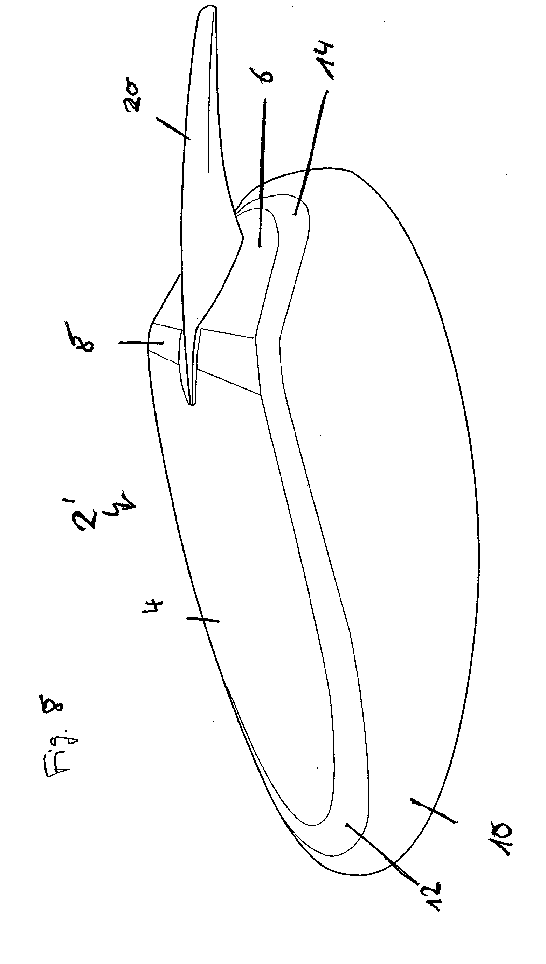

From Fig. 7 another embodiment of a lid according to the present invention can be derived. Similar to the lids shown in Figures 1 to 6, the lid 2' is provided with a handle 20 in the form of a shaft or handle bar. This handle 20 is attached to the lid essentially at the first transition zone 8 and the second portion 6, and is tilted downwards towards its free end. Again the tilted first portion 4 and the tilted second portion 6 are designed in a rather flat manner forming an obtuse angle between each other. Where the first and second portion 4 and 6 change their orientations towards the rim 10 there is a second and third transition zone 12, 14, respectively.

As with the lids shown in Figures 1 to 6 also lid 2' as depicted in Fig. 7 can be safely and easily turned upside down not risking to be hurt by a hot lid. Especially with the lid 2' it is easily possible to lift said lid only at the position located opposite the handle 20 by pressing the handle 20 thereby resting the rim 10 on the cooking utensil in the area of the handle 20. For an even clearer understanding two different perspective views of lid 2' can be derived from Figure 8.

The features disclosed in the description, the figures as well as in the claims can be essential alone or in every combination for the realization of the invention in different embodiments.

### REFERENCE LIST

- 2,2': lid
- 4: first portion
- 6: second portion
- 8: first transition zone
- 10: rim
- 12: second transition zone
- 14: third transition zone
- 16: knob
- 18: knob with grip hole
- 20: handle
- 22: flat, horizontal surface of working space

## Claims

1. Lid (2, 2') for cooking utensil or ovenware, in particular a lid for a frying pan or a cooking vessel, comprising a rim (10), a handle or a knob (16, 18, 20), a first portion (4) and a second portion (6) wherein the first portion (4) of the lid covers a surface greater than the second portion of the lid (6), in particular more than half of the surface covered by the lid, wherein the knob or handle (16, 18, 20) is at least partially attached to the second portion (6), wherein at least part of the first portion (4) or at least part of the second portion (6) are at least partially tilted, their respective inner and/or outer surfaces forming an obtuse or right angle.

2. Lid (2, 2') according to claim 1 wherein
at least part of the outer surface of the first portion (4) forms an essentially flat area or an area being, in particularly only slightly, shaped outwardly or in a convex manner.

3. Lid (2, 2') according to claim 1 or 2 wherein
at least part of the outer surface of the second portion (6) is forms an essentially flat area or an area being, in particularly only slightly, shaped outwardly or in a convex manner.

4. Lid (2, 2') according to one of the preceding claims wherein
the second portion (6) comprises at least one heat shield, in particular on its inner surface.

5. Lid (2, 2') according to one of the preceding claims, further comprising
an, in particular at least partially outwardly rounded or edged, first transition zone (8) between the first and second portion (4, 6) and/or an, in particular at least partially outwardly rounded or edged, second transition zone (12) between the first portion (4) and the rim (10) and/or an, in particular at least partially outwardly rounded or edged, third transition zone (14) between the second portion (6) and the rim (10).

6. Lid (2, 2') according to one of the preceding claims wherein
the knob or handle (16, 18, 20) is at least partially attached to the second portion (6) and/or to the first transition zone (8).

7. Lid (2, 2') according to one of the preceding claims wherein
at least part of the first transition zone (8) represents the highest part of the lid when its rim (10) is placed on a horizontal surface.

8. Lid (2, 2') according to one of the preceding claims wherein
the handle (20) has a first part which is attached to the lid and a second part opposite said first part, and wherein when the rim of the lid is placed on a horizontal surface the first part is located above the second part of the handle (20).

9. Lid (2, 2') according to one of the preceding claims wherein
the outer surface of the first portion (4) comprises at least one support point or base, in particular three or four support points or bases, and/or at least two protruding bars on which the lid can be placed in a stable manner when turned upside down.

10. Cooking utensil, in particular a frying pan or a cooking vessel, comprising
a lid according to one of the preceding claims.

11. Cooking utensil according to claim 10 wherein
said cooking utensil is a skillet, wok, stove, casserole, baking dish, cooking vessel, fondue vessel, microwave vessel or pan.

12. Ovenware comprising
a lid according to one of claims 1 to 9.

13. Ovenware according to claim 12 wherein
said ovenware is a gratin dish or a lasagne dish.

14. Use of the lid according to one of claims 1 to 9 as a lid for cooking utensil or ovenware, in particular for a pan, in particular a frying pan, a cooking vessel, a wok, a skillet, a stove, casserole, baking dish, fondue vessel, a microwave vessel, a lasagne dish or a gratin dish.
